# EUROPÄISCHE PATENTSCHRIFT

(11) **EP 3 717 800 B1**
(45) Veröffentlichungstag und Bekanntmachung des Hinweises auf die Patenterteilung: **29.12.2021**
(21) Anmeldenummer: 18815121.1
(22) Anmeldetag: 27.11.2018
(51) Int. Cl.: F16H 57/027, F16H 57/02

(54) **GETRIEBE MIT SEPARATEM ENTLÜFTERELEMENT**
TRANSMISSION WITH A SEPARATE BREATHER ELEMENT
TRANSMISSION À ÉLÉMENT DE VENTILATION SÉPARÉE

(30) Priorität: 30.11.2017 DE 102017128417
(43) Veröffentlichungstag der Anmeldung: 07.10.2020
(73) Patentinhaber: Getrag Ford Transmissions GmbH, 50735 Köln (DE)
(72) Erfinder: SOEHNGE, Patrick, 42287 Wuppertal (DE); SCHEVE, Stephan, 53844 Troisdorf (DE); LAU, Patric, 52391 Vettweiß-Kelz (DE); PRICKEN, Frank, 47803 Krefeld (DE)
(74) Vertreter: Wagner Albiger & Partner Patentanwälte mbB
(86) Internationale Anmeldenummer: PCT/EP2018/082672
(87) Internationale Veröffentlichungsnummer: WO 2019/105918

(56) Entgegenhaltungen:
- EP-A1- 2 287 031
- EP-A2- 1 516 765
- JP-U- S58 167 377
- JP-U- S62 112 357

## Beschreibung

Die Erfindung betrifft ein Getriebe für ein Kraftfahrzeug, das ein Gehäuse und einen Entlüftungskanal aufweist, durch den Luft aus einem von dem Gehäuse umschlossenen Innenraum des Getriebes entweichen kann.

Die DE 10 2014 215 203 A1 offenbart ein Entlüfterelement für ein Fahrzeuggetriebe, das den Entlüftungskanal bzw. zumindest eine erste Kanalwandung des Entlüftungskanals bildet. Das Fahrzeuggetriebe weist ein erstes Gehäuseteil und ein zweites Gehäuseteil auf, wobei im montierten Zustand des Getriebes das erste Gehäuseteil und das zweite Gehäuseteil aneinander anliegen und fest miteinander verbunden sind. Das separate Entlüfterelement weist eine Haltevorrichtung auf, um das Entlüfterelement an dem ersten Gehäuseteil zu befestigen. Die Befestigung des Entlüfterelements an dem ersten Gehäuseteil benötigt dabei einen gesonderten Montageschritt, was die Montage des Getriebes verteuert.

Zwar kann durch das separate Entlüfterelement, das sich von dem ersten Gehäuseteil über eine Teilungslinie zwischen den Gehäuseteilen bis in die zweite Gehäuseteil des Getriebes erstreckt, in kostengünstiger Weise der Entlüftungskanal bzw. Teile davon realisiert werden. Der Entlüftungskanal ist dabei notwendig, um ein Entweichen von Luft möglich zu machen, wenn beispielsweise durch eine Temperaturerhöhung in dem Getriebe ein Druckanstieg erfolgt. Dabei sollte der Entlüftungskanal so geschaffen sein, dass nur Luft aus dem Getriebe entweichen kann. Das Entweichen von Öl oder kleinen Öltropfen sollte dabei vermieden werden.

Die JP S58 167377 U offenbart ein separates Entlüfterelement, das zwischen einem ersten Gehäuseteil und einem zweiten Gehäuseteil angeordnet ist, wobei sich das Entlüfterelement in einer Steckposition in dem ersten Gehäuseteil befindet und einen Fixieranschlag aufweist, an dem im montierten Zustand des Getriebes das zweite Gehäuseteil anliegt und somit das Entlüfterelement in der Steckposition sicher fixiert. Somit ist es nicht notwendig, das separate Entlüfterelement in einem gesonderten Montageschritt an das erste Gehäuseteil beispielsweise durch die Verwendung von Schrauben zu befestigen, sondern es reicht lediglich aus, das Entlüfterelement vor dem Verbinden von erster und zweiter Gehäusehälfte in die Steckposition zu bringen. Durch das Befestigen der Gehäuseteile aneinander findet dabei automatisch die Fixierung des Entlüfterelements in der Steckposition statt. Wenn das zweite Gehäuseteil auf dem Fixieranschlag anliegt, ist das Entlüfterelement in seiner Bewegung in alle Richtungen fixiert. Das zweite Gehäuseteil verhindert dabei, dass sich das Entlüfterelement aus der Steckposition entgegen der Richtung, in der es in die Steckposition gesteckt wurde, wieder zurück bewegen kann. Die EP 1 516 765 A2 und die EP 2 287 031 A1 zeigen jeweils ein Bauteil mit zwei Gehäuseteilen und separatem Entlüfterelement. Das Entlüfterelement erstreckt sich zwischen den Gehäuseteilen, in denen jeweils ein Ende des Entlüfterelements eingesteckt ist.

Gleichwohl durch das separate Entlüfterelement in einfacher Weise ein Entlüftungskanal, durch den im Wesentlichen nur Luft aus dem Getriebe entweichen kann, realisiert werden kann, besteht ein Bedarf an der Bereitstellung eines Getriebes für ein Kraftfahrzeug, das einen Entlüftungskanal aufweist, einfach aufgebaut ist und sich einfach und kostengünstig herstellen lässt.

Die der Erfindung zu Grunde liegende Aufgabe wird mit der Merkmalskombination gemäß Anspruch 1 gelöst. Ausführungsbeispiele der Erfindung werden durch die Unteransprüche beschrieben.

Erfindungsgemäß ragt die erste Kanalwandung in eine sacklochförmige Aussparung des ersten Gehäuseteils hinein, wobei sie die Aussparung in zwei Kanalabschnitte unterteilt, die an einem Boden der Aussparung miteinander verbunden sind. Durch das Stecken des Entlüfterelements mit der Kanalwandung in die Aussparung lässt sich somit ein Entlüftungskanal mit einem U-förmigen Kanalbereich schaffen. Durch eine derartige Kanalführung lässt sich in effektiver Weise eine Trennung von Öl und Luft durch die Labyrinthwirkung des U-förmigen Kanalbereichs realisieren.

Die Anlage zwischen dem Fixieranschlag und dem zweiten Gehäuseteil kann spielbehaftet sein. So kann eine kleine Fuge verbleiben zwischen dem Fixieranschlag und dem zweiten Gehäuseteil. Jedoch ist die Fuge so klein, dass das Entlüfterelement sicher in der Steckposition gehalten wird. Auch besteht die Möglichkeit, dass eine Pressung zwischen Fixieranschlag und zweitem Gehäuseteil gegeben ist. Dann liegt der Fixieranschlag ohne Spiel an dem zweiten Gehäuseteil an.

Vorzugsweise bilden das erste Gehäuseteil und das zweite Gehäuseteil eine ebene Teilungslinie aus. Bei dem ersten Gehäuseteil kann es sich um eine erste Gehäusehälfte handeln, während das zweite Gehäuseteil eine zweite Gehäusehälfte darstellt. Die Erfindung soll aber auch Getriebe umfassen, deren Gehäuse sich aus mehr als zwei Gehäuseteilen zusammensetzt (beispielsweise kann das Gehäuse drei Gehäuseteile umfassen).

Das Entlüfterelement kann eine Abdeckung aufweisen, von der sich die erste Kanalwandung vorzugsweise senkrecht erstreckt. In einem bevorzugten Ausführungsbeispiel ist die Fixieranlage auf der Abdeckung angeordnet. Die Steckposition und das Entlüftungselement können dabei so ausgebildet sein, dass die Abdeckung sich im Wesentlichen parallel zu der Teilungslinie der sich gegenüberstehenden Gehäuseteile erstreckt.

Das Entlüfterelement kann ein Spritzgussteil sein, vorzugsweise aus Kunststoff. Ein Grundkörper des Entlüftungselements kann aus einem ersten Material sein. Der Fixieranschlag kann ein zweites Material umfassen, das weicher als das erste Material ist. Da beim Verbinden der Gehäuseteile zwischen dem zweiten Gehäuseteil und dem Fixieranschlag neben der spielbehafteten Anlage auch eine verspannte Anlage grundsätzlich möglich ist, können durch das weichere Material etwaiger Fertigungstoleranzen ausgeglichen werden. Somit ist sichergestellt, dass das Entlüfterelement in der Steckposition einerseits nicht hin und her wackelt, was im Betrieb des Getriebes zu unerwünschten Geräuschen führen könnte, und andererseits das Entlüfterelement auch nicht zu großen Spannungen ausgesetzt ist, wenn bedingt durch die Toleranzen ein besonders enger Presssitz gegeben ist.

Anhand der in der Zeichnung dargestellten Ausführungsbeispiele wird die Erfindung näher erläutert. Es zeigen:
- Figur 1: ein nicht erfindungsgemäßes Ausführungsbeispiel für ein KfZ-Getriebe in perspektivischer Schnittansicht;
- Figur 2: einen vergrößerten Ausschnitt der Schnittansicht der Figur 1;
- Figur 3: ein separates Entlüfterelement in einer ersten Ausführung;
- Figur 4: ein erfindungsgemäßes Ausführungsbeispiel für ein KfZ-Getriebe, wobei hier in perspektivischer Schnittansicht nur ein erstes Gehäuseteil dargestellt ist;
- Figur 5: einen vergrößerten Ausschnitt der Schnittansicht der Figur 4;
- Figur 6: ein separates Entlüfterelement in einer zweiten Ausführung, welche in einem erfindungsgemäßes KfZ-Getriebe eingesetzt werden kann; und
- Figur 7: das separate Entlüfterelement der Figur 6 in einer anderen perspektivischen Ansicht.

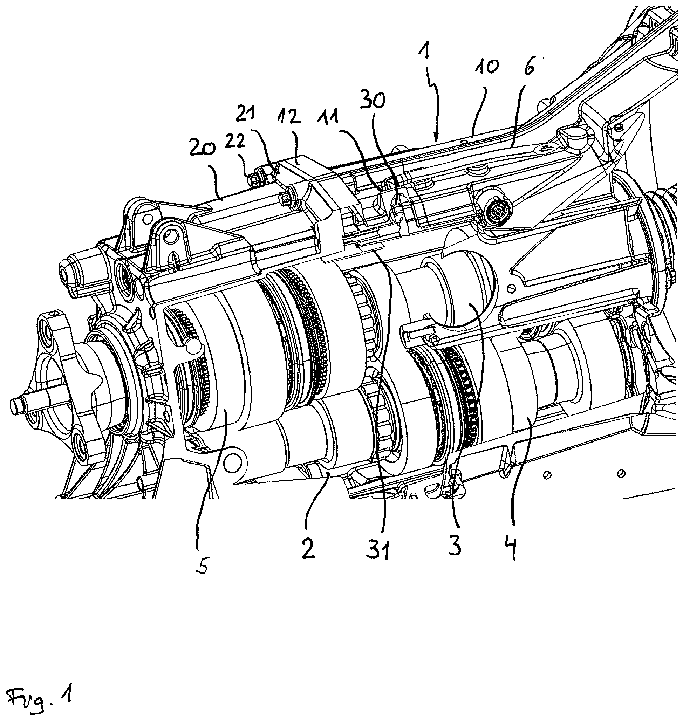

Die Figuren 1 bis 3 zeigen ein Getriebe für ein Kraftfahrzeug bzw. Teile davon in perspektivischen Ansichten, die nicht erfindungsgemäß sind.

Das Getriebe weist ein Gehäuse 1 auf, das ein erstes Gehäuseteil 10 und ein zweites Gehäuseteil 20 umfasst. Das Gehäuse 1 umschließt einen Innenraum 2 des Getriebes, in dem eine Eingangswelle 3, eine Vorgelegewelle 4 und eine Ausgangswelle 5 drehbar gelagert sind. Die Eingangswelle 3 und die Ausgangswelle 5 sind koaxial zueinander angeordnet, sodass es sich hier bei dem in Figur 1 dargestellten Getriebe um ein Inline-Getriebe handelt.

In dem Innenraum 2 befindet sich ein (Getriebe-)Öl, das durch die Rotation der Wellen 3, 4, 5 und den darauf angeordneten Zahnrädern im Innenraum 2 herumgeschleudert wird. Erfolgt eine Temperaturerhöhung im Innenraum 2 des Getriebes, so dehnt sich die im Innenraum 2 befindliche Luft aus, was zu einem Druckanstieg im Getriebe führt. Um diesen Druckanstieg abbauen zu können, weist das Getriebe einen Entlüftungskanal 30 auf, der in dem zweiten Gehäuseteil 20 eingeformt ist. In Figur 1 ist ein Entlüftungsschlauch 6 zu erkennen, der an einer Entlüftungsöffnung 11 des ersten Gehäuseteils an den Entlüftungskanal 30 angeschlossen ist.

Das erste Gehäuseteil 10 weist einen umlaufenden Flansch 12 auf, der im montierten Zustand des Getriebes an einem umlaufenden Flansch 21 des zweiten Gehäuseteils 20 anliegt, möglicherweise unter Zwischenschaltung einer Dichtung. Über Schrauben 22, die in Gewindebohrungen (in der Darstellung der Figur 1 verdeckt) des ersten Gehäuseteils 10 greifen, werden die Gehäuseteile 10, 20 aneinander befestigt.

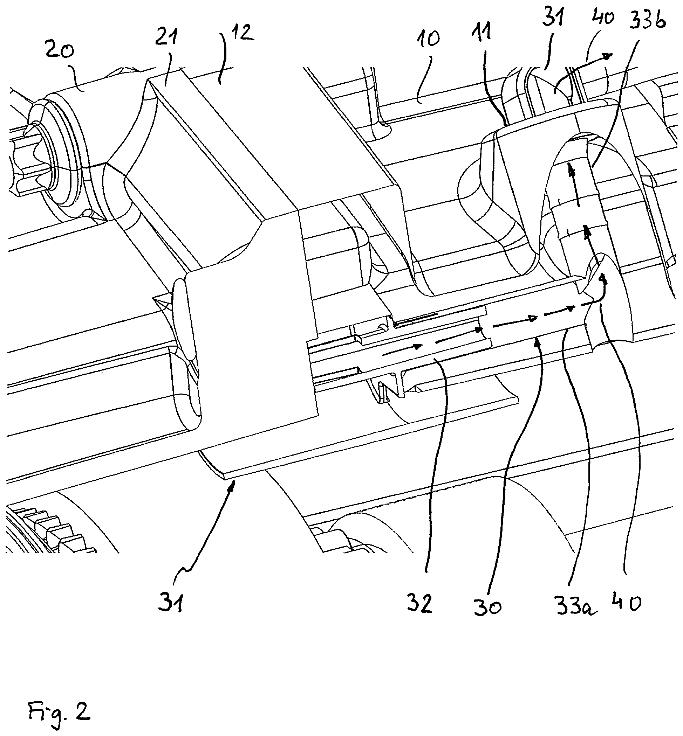

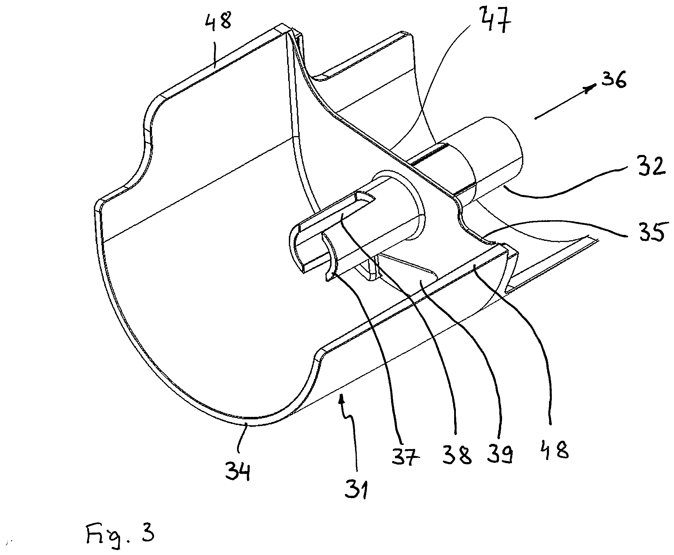

Figur 2 zeigt einen vergrößerten Ausschnitt aus der Figur 1. Zu erkennen ist ein separates Entlüfterelement 31, das in Figur 3 in Alleinstellung dargestellt ist. Das separate Entlüfterelement 31 bildet eine erste Kanalwandung des Entlüftungskanals 30, das im Ausführungsbeispiel der Figuren 1 bis 3 als Rohr 32 ausgebildet ist. Das Rohr 32 steckt dabei teilweise in einem rohrförmigen Kanalabschnitt 33a des Entlüftungskanals 30. Der rohrförmige Kanalabschnitt 33a mündet in einen zum rohrförmigen Kanalabschnitt 33 senkrecht stehenden Endabschnitt 33b, der sich bis zu der Entlüfteröffnung 11, an dem der Entlüftungsschlauch 6 angeschlossen ist, erstreckt.

Wie sich insbesondere der Figur 3 entnehmen lässt, weist das Entlüfterelement 31 neben dem Rohr 32 einen Spritzschutz 34 auf, der als Segment einer zylinderförmigen Mantelfläche ausgebildet ist. Der Spritzschutz 34 bzw. das Segment 34 ist koaxial zum Rohr 32 angeordnet. Das Segment erstreckt sich dabei in Umfangsrichtung in einem Winkelbereich von ca. 180°.

Ein Radialsteg 35 verbindet das Rohr 32 mit dem Spritzschutz 34. Aus Figur 2 ist zu entnehmen, dass der Radialsteg 35 an einem stirnseitigen Ende des rohrförmigen Kanalabschnitt 33a anliegt. Somit dient der Radialsteg 35 als axialer Steckanschlag für das Entlüfterelement 31. In der in Figur 2 dargestellten Steckposition ist das Entlüfterelement 31 in radialer Richtung fixiert durch die Anlage einer Außenfläche des Rohrs 32 an einer Innenfläche des rohrförmigen Kanalabschnitts 33a. In einer ersten axialen Richtung 36, in die das Entlüfterelement 31 bei der Montage in die Steckposition geschoben wird, ist das Entlüfterelement 31 durch den Radialsteg 35 fixiert. Im montierten Zustand liegt das zweite Gehäuseteil 20, möglicherweise mit einem gewissen Spiel, an einem Fixieranschlag 37 des Entlüfterelements 31 an. Der Fixieranschlag 37 fällt hier mit einem stirnseitigen Ende des Rohrs 32 zusammen. Es handelt sich dabei um das stirnseitige Ende des Rohrs 32, das dem rohrförmigen Kanalabschnitt 33a abgewandt ist.

In der Nähe des Fixieranschlags 37 weist das Rohr 32 zwei Längsschlitze 38 auf, durch die Luft aus dem Innenraum 2 des Getriebes in das Rohr 32 gelangen kann. Durch den Spritzschutz 34 wird verhindert, dass durch die Rotation der im Innenraum 2 befindlichen Wellen 3, 4, 5 hochgeschleudertes Öl in das Rohr 32 gelangen kann. Eine Öffnung 39 in dem Radialsteg 35 dient dazu, dass die Luft ohne große Widerstände aus allen Teilen des Innenraums zu den Längsschlitzen 38 des Rohrs 32 gelangen kann. Die Pfeile 40 in Figur 2 verdeutlichen den Fluss der Luft durch den Entlüftungskanal 30. Der Radialsteg 35 weist eine hier geradlinig ausgebildete Anlagekante 47 auf, die in Steckposition des Entlüftungselements 31 mit einer entsprechend ausgeformten Anlagefläche des ersten Gehäuseteils 10 zusammenwirkt, um die Drehposition festzulegen und somit eine Verdrehsicherung bietet. Ein anderer oder zusätzlicher Verdrehschutz besteht darin, seitliche Endkanten 48 des Spritzschutzes 34 zur Anlage an entsprechende Gegenflächen am ersten Gehäuseteil 10 zu bringen.

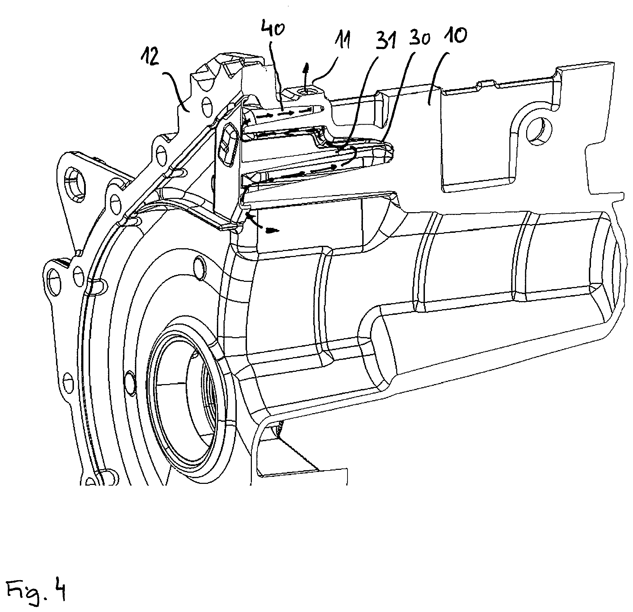

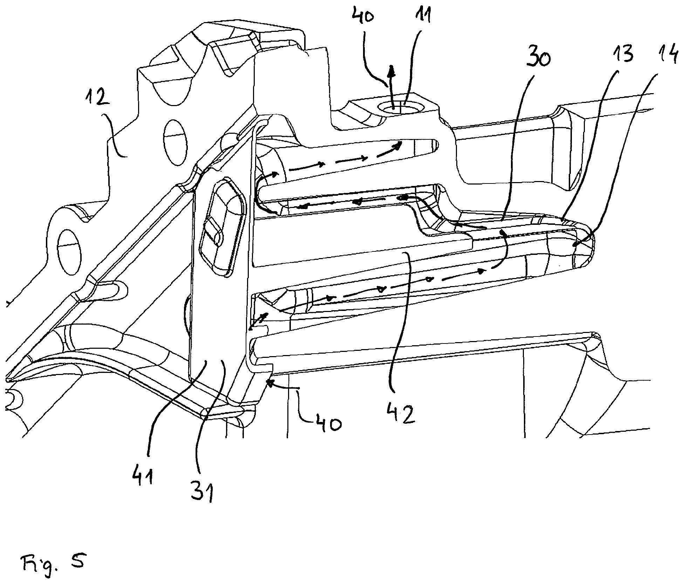

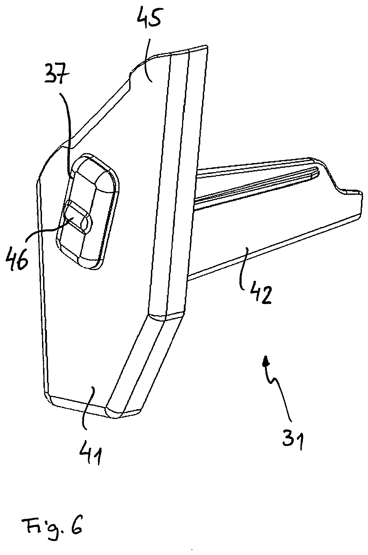

Figur 4 zeigt ein Ausführungsbeispiel für das erfindungsgemäße Getriebe, wobei hier nur das erste Gehäuseteil 10 in perspektivischer Schnittansicht dargestellt ist. Bauteile oder Merkmale in Figur 4, die zu Bauteilen oder Merkmalen der Figuren 1 bis 3 ähnlich oder identisch sind, werden mit gleichen Bezugszeichen versehen. Analoges gilt für die Figuren 5 bis 7, die Ausschnitte bzw. Einzelheiten der Figur 4 zeigen.

In den Figuren 4 und 5 sind gut zu erkennen die Entlüftungsöffnung 11 sowie der Flansch 12, der in einer Ebene liegt und somit mit dem hier nicht dargestellten zweiten Gehäuseteil 20 eine ebene Teilungslinie bildet. Das hier verwendete Entlüftungselement ist ebenfalls mit 31 bezeichnet, obwohl dessen Aufbau sich von dem Entlüftungselement 31 des Ausführungsbeispiels der Figuren 1 bis 3 unterscheidet. Anhand der Pfeile 40 lässt sich der Fluss der durch den Entlüftungskanal 30 strömenden Luft nachvollziehen (siehe insbesondere Figur 5, die einen vergrößerten Ausschnitt der Figur 4 darstellt).

Das Entlüfterelement 31 weist eine Abdeckung 41 auf, von der sich in etwa senkrecht die erste Kanalwandung in Form eines Schwerts 42 erstreckt. Das Schwert 42 ragt dabei in eine sacklochförmige Aussparung 13 in dem ersten Gehäuseteil 10 hinein. Durch das Hineinragen des Schwerts 41 in die Aussparung 13 entstehen zwei Kanalabschnitte, die an einem Boden 14 der Aussparung 13 miteinander verbunden sind. Dadurch entsteht ein U-förmiger Kanalbereich, so dass durch den labyrinthförmigen Weg der Luft (siehe Pfeile 40) eine lange Kanalstrecke entsteht.

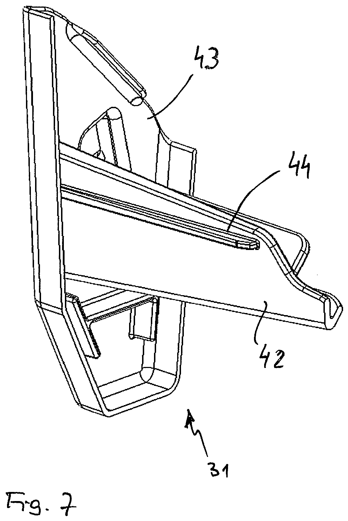

Eine Unterseite 43 der Abdeckung 41 (siehe Figur 7) dient dabei als Steckanlage, so dass die in Figur 5 dargestellte Steckposition in Steckrichtung definiert ist. Das Schwert 42, welches ein in etwa einen L-förmigen Querschnitt aufweist, umfasst wenigstens einen Abstütz- oder Anlagesteg 44, mit dem das Entlüfterelement 31 mit der Aussparung 13 in Anlage kommt und die Kanalabschnitte des U-förmigen Kanalbereichs voneinander abdichtet. Der Anlegesteg 44 definiert die Steckposition quer zur Steckrichtung.

Auf einer Oberseite 45 der Abdeckung 41 ist der Fixieranschlag 37 angeordnet, der eine kleine Erhöhung 46 aufweist. Die Erhöhung 46 ist dabei aus einem Material geformt, das weicher ist als das Material, welches zur Ausbildung der übrigen Teile des Entlüfterelements 31 verwendet wird. Gegen die Erhöhung 46 drückt im montierten Zustand des Getriebes das zweite Gehäuseteil 20, um das Entlüfterelement 31 in seiner Steckposition zu fixieren. Es ist dabei nicht notwendig, dass Entlüfterelement durch zusätzliche Befestigungsmittel wie Schrauben oder dergleichen in einem gesonderten Montageschritt an einem der beiden Gehäuseteile zu befestigen.

Auch sei darauf hingewiesen, dass der Fixieranschlag 37 sich an einer Stelle der flächigen Abdeckung 41 befindet, die nicht durch Verstärkungsstrukturen an der Unterseite 43 (siehe Figur 7) verstärkt ist. Somit weist die Abdeckung 37 an der Stelle des Fixieranschlags 37 eine gewisse Flexibilität auf, die die Funktion des weicheren Materials der Erhöhung 46 verstärkt bzw. auch ganz übernehmen kann. In diesem Sinne könnte auch der Radialsteg 35 des anderen Ausführungsbeispiels (siehe Figur 1 bis 3) durch geeignete Maßnahmen wie das Vorsehen von Schwächungsbereichen so gestaltet werden, dass in axialer Richtung, also in Steckrichtung, eine gewisse Flexibilität gegeben ist, damit es in axialer Richtung nicht zu zu großen Spannungen kommt, wenn das zweite Gehäuseteil montiert wird.

### Bezugszeichenliste

- 1: Gehäuse
- 2: Innenraum
- 3: Eingangswelle
- 4: Vorgelegewelle
- 5: Ausgangswelle
- 6: Entlüftungsschlauch

- 10: Erstes Gehäuseteil
- 11: Entlüftungsöffnung
- 12: Flansch
- 13: Aussparung
- 14: Boden

- 20: Zweites Gehäuseteil
- 21: Flansch
- 22: Schraube

- 30: Entlüftungskanal
- 31: Entlüftungselement
- 32: Rohr
- 33a: Kanalabschnitt
- 33b: Endabschnitt
- 34: Spritzschutz
- 35: Radialsteg
- 36: Steckrichtung
- 37: Fixieranschlag
- 38: Längsschlitz
- 39: Öffnung
- 40: Pfeil (Luftströmung)
- 41: Abdeckung
- 42: Schwert
- 43: Unterseite
- 44: Anlagesteg
- 45: Oberseite
- 46: Erhöhung
- 47: Anlagekante
- 48: Endkante

## Patentansprüche

1. Getriebe für ein Kraftfahrzeug,
- mit einem Gehäuse (1), das ein erstes Gehäuseteil (10) und ein zweites Gehäuseteil (20) aufweist, wobei im montierten Zustand des Getriebes das erste Gehäuseteil (10) und das zweite Gehäuseteil (20) miteinander verbunden sind,
- mit einem Entlüftungskanal (30), durch den Luft aus dem Getriebe entweichen kann, und
- mit einem separaten Entlüfterelement (31), das sich in das erste Gehäuseteil (10) erstreckt und zumindest eine erste Kanalwandung des Entlüftungskanals (30) bildet,
wobei sich das Entlüfterelement (31) in einer Steckposition in dem ersten Gehäuseteil (10) befindet und einen Fixieranschlag (37) aufweist, an dem im montierten Zustand des Getriebes das zweite Gehäuseteil (20) anliegt und somit das Entlüfterelement (31) in der Steckposition sicher fixiert, **dadurch gekennzeichnet, dass** die erste Kanalwandung in eine sacklochförmige Aussparung (13) des ersten Gehäuseteils (10) hineinragt, wobei sie in der Aussparung (13) wenigstens zwei Kanalabschnitte schafft, die an einem Boden (14) der Aussparung (13) miteinander verbunden sind.

2. Getriebe nach Anspruch 1, **dadurch gekennzeichnet, dass** das Entlüfterelement (31) eine Abdeckung (41) aufweist, von der sich die erste Kanalwandung erstreckt.

3. Getriebe nach Anspruch 2, **dadurch gekennzeichnet, dass** der Fixieranschlag (37) auf der Abdeckung (41) angeordnet ist.

4. Getriebe nach einem der Ansprüche 1 bis 3, **dadurch gekennzeichnet, dass** ein Grundkörper des Entlüfterelements ein erstes Material und der Fixieranschlag ein zweites Material umfasst, das weicher als das erste Material ist.

## Claims

1. Transmission for a motor vehicle,
- having a housing (1) which has a first housing part (10) and a second housing part (20), wherein, in the assembled state of the transmission, the first housing part (10) and the second housing part (20) are joined together,
- having a vent duct (30) through which air can escape from the transmission, and
- having a separate breather element (31) which extends into the first housing part (10) and forms at least one first duct wall of the vent duct (30),
wherein the breather element (31) is located in a plug-in position in the first housing part (10) and has a fixing stop (37) against which the second housing part (20) bears in the assembled state of the transmission and thus securely fixes the breather element (31) in the plug-in position, **characterised in that** the first duct wall projects into a blind bore-shaped recess (13) of the first housing part (10), wherein it creates at least two duct sections in the recess (13) which are joined together at a bottom (14) of the recess (13).

2. Transmission according to claim 1, **characterised in that** the breather element (31) has a cover (41) from which the first duct wall extends.

3. Transmission according to claim 2, **characterised in that** the fixing stop (37) is arranged on the cover (41).

4. Transmission according to any of claims 1 to 3, **characterised in that** a main body of the breather element comprises a first material and the fixing stop comprises a second material which is softer than the first material.

## Revendications

1. Transmission pour un véhicule automobile,
- avec un boîtier (1) qui présente une première partie de boîtier (10) et une seconde partie de boîtier (20), dans lequel dans l'état monté de la transmission, la première partie de boîtier (10) et la seconde partie de boîtier (20) sont reliées l'une à l'autre,
- avec un canal de ventilation (30), par lequel de l'air peut s'échapper de la transmission, et
- avec un élément de ventilation (31) séparé qui s'étend dans la première partie de boîtier (10) et forme au moins une première paroi de canal du canal de ventilation (30),
dans laquelle l'élément de ventilation (31) se trouve dans une position d'enfichage dans la première partie de boîtier (10) et présente une butée de fixation (37), contre laquelle dans l'état monté de la transmission la seconde partie de boîtier (20) repose et fixe ainsi l'élément de ventilation (31) dans la position d'enfichage de manière sûre, **caractérisée en ce que** la première paroi de canal pénètre dans un évidement (13) en forme de trou borgne de la première partie de boîtier (10), dans laquelle elle crée dans l'évidement (13) au moins deux sections de canal qui sont reliées l'une à l'autre au niveau d'un fond (14) de l'évidement (13).

2. Transmission selon la revendication 1, **caractérisée en ce que** l'élément de ventilation (31) présente un recouvrement (41), duquel s'étend la première paroi de canal.

3. Transmission selon la revendication 2, **caractérisée en ce que** la butée de fixation (37) est agencée sur le recouvrement (41).

4. Transmission selon l'une quelconque des revendications 1 à 3, **caractérisée en ce qu'**un corps de base de l'élément de ventilation comprend un premier matériau et la butée de fixation comprend un second matériau qui est plus mou que le premier matériau.
